# EUROPÄISCHE PATENTSCHRIFT

(11) **EP 3 271 205 B1**
(45) Veröffentlichungstag und Bekanntmachung des Hinweises auf die Patenterteilung: **09.05.2018**
(21) Anmeldenummer: 15712325.8
(22) Anmeldetag: 19.03.2015
(51) Int. Cl.: B60K 23/04, B60K 23/08

(54) **AUSGLEICHSEINHEIT EINES KRAFTFAHRZEUGS SOWIE VERFAHREN ZU DEREN STEUERUNG**
BALANCING UNIT OF A MOTOR VEHICLE AND CORRESPONDING CONTROL METHOD
UNITÉ D'ÉQUILIBRAGE D'UN VÉHICULE AUTOMOBILE ET PROCÉDÉ DE COMMANDE CORRESPONDANT

(43) Veröffentlichungstag der Anmeldung: 24.01.2018
(73) Patentinhaber: GKN AUTOMOTIVE LTD., Redditch Worcestershire B98 0AJ (GB)
(72) Erfinder: MÖHLMANN, Reinhard, 51467 Bergisch Gladbach (DE)
(74) Vertreter: Bungartz Christophersen Partnerschaft mbB Patentanwälte
(86) Internationale Anmeldenummer: PCT/EP2015/055839
(87) Internationale Veröffentlichungsnummer: WO 2016/146201

(56) Entgegenhaltungen:
- EP-A1- 1 967 405
- EP-A1- 2 116 411
- US-A- 5 279 384

## Beschreibung

Die Erfindung betrifft ein System zur Ansteuerung einer differentiallosen, kupplungsgesteuerten Ausgleichseinheit eines Kraftfahrzeugs, insbesondere eines Personenkraftwagens, nach dem Oberbegriff des Anspruchs 1 sowie ein Verfahren zur Steuerung einer solchen Ausgleichseinheit nach dem Oberbegriff des Anspruchs 10. Die Erfindung betrifft außerdem ein Computerprogrammprodukt, das eine elektronische Steuereinheit zur Steuerung einer derartigen Ausgleichseinheit dazu veranlasst, die Ausgleichseinheit nach dem erfindungsgemäßen Verfahren anzusteuern, sowie die Steuereinheit selbst. Die Erfindung betrifft außerdem eine differentiallose, kupplungsgesteuerte (Quer-)Ausgleichseinheit eines Kraftfahrzeugs, insbesondere eines Personenkraftwagens.

Derartige Ausgleichseinheiten und Systeme und Verfahren zu deren Betrieb sind zum Beispiel aus der gattungsbildenden EP 2 116 411 A1 oder der DE 40 39 391 A1 bekannt. Hierbei werden jeweils zwei separat ansteuerbare Steuerventile dazu verwendet, die erste bzw. zweite Kupplung gezielt mit einem bestimmten Steuerdruck anzusteuern, um das von der jeweiligen Kupplung auf das zugeordnete Antriebsrad übertragbare Kupplungsmoment fahrzustandsabhängig zu beeinflussen. Diese Ausgestaltungen ermöglichen es, das rechte und linke Antriebsrad mit unterschiedlichen Drehmomenten zu beaufschlagen und in annähernd jeder denkbaren Fahrsituation die gewünschte Leistungs- bzw. Momentenverteilung auf die beiden Antriebsräder einer Achse einzustellen und in kritischen Fahrsituation gezielt korrigierend einzugreifen.

Nachteilig an den vorstehend genannten Systemen und Verfahren ist allerdings deren Komplexität. Sie erfordern komplexe und potentiell störungsanfällige Hard- und Software sowie eine Vielzahl von Komponenten. Der Entwicklungs- und Applikationsaufwand bei einem Fahrzeug ist hoch. Berücksichtigt man ferner, dass derartige Systeme und Verfahren in der Regel als Allradmodule für Fahrzeuge mit abschalt- bzw. zuschaltbarem Allradantrieb vorgesehen werden und der tatsächliche Fahranteil im Allradbetrieb während der Lebensdauer eines Fahrzeugs typischerweise sehr gering ist, wird der Aufwand für die Entwicklung- und Applikation eines solchen Systems und Verfahrens von den Herstellern nicht selten für zu hoch und für zu kostspielig angesehen. Dies gilt insbesondere für Hersteller von Fahrzeugen unterhalb des Premiumsegments und von Fahrzeugtypen, die nicht aufgrund ihrer Bestimmung besonderen Bedarf an derartigen Systemen haben, wie es zum Beispiel bei Geländefahrzeugen der Fall sein kann.

Weiter sind Systeme und Verfahren zur Ansteuerung einer differentiallosen, kupplungsgesteuerten Ausgleichseinheit eines Kraftfahrzeugs bekannt oder in der Entwicklung, bei denen die beiden Kupplungsseiten stets in jeweils gleicher Höhe mit der für das jeweilige Kupplungsmoment verantwortlichen Stellgröße beaufschlagt werden. Derartige Systeme haben jedoch den Nachteil, dass dem einen Antriebsrad nicht mehr ein übertragbares Antriebsmoment zugewiesen werden kann, das sich von dem dem anderen Antriebsrad zugewiesenen übertragbaren Antriebsmoment unterscheidet. Das gezielte Einstellen eines Giermoments zur Beeinflussung des Einlenkverhaltens (Active-Yaw Funktion) bzw. ein seitenindividuell einstellbarer Schlupf ist nicht mehr möglich. Mit derartigen Systemen, die in der nachveröffentlichten internationalen Patentanmeldung PCT/EP2013/077248 (WO 2015/090392 A1) oder der deutschen Offenlegungsschrift DE 40 21 747 A1 beschrieben sind, wird daher ein wesentlicher Vorteil aufgegeben, den differentiallose, kupplungsgesteuerte Ausgleichseinheiten mit individuell ansteuerbaren Kupplungen grundsätzlich bieten.

Aufgabe der Erfindung ist es, eine Ausgleichseinheit der eingangs genannten Art, ein System zum Betreiben einer differentiallosen Ausgleichseinheit und ein Verfahren zum Betreiben einer solchen Ausgleichseinheit anzugeben, die in ihrer Komplexität gegenüber den bekannten Systemen und Verfahren mit individuell ansteuerbaren Seitenwellenkupplungen reduziert sind und trotzdem in zumindest weiten Grenzen eine individuelle Ansteuerung beider Seitenwellenkupplungen mit unterschiedlichen Drehmomenten bzw. seitenindividuellem Schlupf ermöglichen. Dabei wird insbesondere ein Antriebskonzept mit zuschaltbaren Allradantrieb ins Auge gefasst, wobei die Ausgleichseinheit bevorzugt Teil einer zuschaltbaren Sekundärachse (Add-On Achse) sein kann. Es soll ein Weg gefunden werden, die komplexen Systeme und Verfahren durch Reduzierung des technischen Aufwands "abzurüsten", unter anderem auch mit dem Ziel, die Systeme und Verfahren auch für Fahrzeughersteller von Fahrzeugen unterhalb des Premiumsegments attraktiv zu machen, ohne dabei auf Möglichkeit, die beiden Kupplungen unterschiedlich zu beaufschlagen, zu verzichten.

Diese Aufgabe wird jeweils durch die Gegenstände der unabhängigen Ansprüche 1, 10, 13, 15 und 16 gelöst. Bezüglich der Ausgleichseinheit wird sie dadurch gelöst, dass die erste Kupplung und die zweite Kupplung voneinander unterschiedliche Kupplungseigenschaften aufweisen. Hinsichtlich des Systems und Verfahrens zum Betreiben einer derartigen Ausgleichseinheit ist erfindungsgemäß vorgesehen, dass die von der Stellgrößeneinheit zur Verfügung gestellte Stellgröße der ersten Kupplung ohne Zwischenschaltung eines (der Stellgrößeneinheit nachgelagerten) Individualsteuerglieds zugeleitet wird, während die von der Stellgrößeneinheit zur Verfügung gestellte Stellgröße der zweiten Kupplung unter Zwischenschaltung eines der Stellgrößeneinheit nachgelagerten Individualsteuerglieds zugeleitet wird.

Die von der Stellgrößeneinheit zur Verfügung gestellte Stellgröße wird der ersten Kupplung also ohne Zwischenschaltung eines (der Stellgrößeneinheit nachgelagerten) Individualsteuerglieds unverändert zugeleitet. Die Höhe der auf die erste Kupplung wirkenden Stellgröße entspricht damit - von etwaigen Verlusten wie Übertragungsverlusten abgesehen - der originär von der Stellgrößeneinheit zur Verfügung gestellten Höhe der Stellgröße. Das Einstellen der Höhe der auf den Betätigungsmechanismus der ersten Kupplung wirkenden Stellgröße erfolgt über die Beeinflussung der Stellgrößeneinheit mittels einer geeigneten Steuereinheit. Die Höhe der originär von der Stellgrößeneinheit erzeugten Stellgröße ist demnach in einer ersten Stufe über eine gezielte Ansteuerung der Stellgrößeneinheit mittels einer Steuereinrichtung veränderlich.

Der zweiten Kupplung ist hingegen ein der Stellgrößeneinheit nachgelagertes Individualsteuerglied zugeordnet. Das der zweiten Kupplung zugeordnete Individualsteuerglied sorgt dafür, dass die von der Stellgrößeneinheit originär zur Verfügung gestellte Stellgröße in einer zweiten Stufe für die zweite Kupplung der Höhe nach zusätzlich beeinflussbar, insbesondere verringerbar, ist und der zweiten Kupplung in anderer Höhe, insbesondere in verringerter Höhe, zugeleitet wird als der ersten Kupplung.

Auf diese Weise lassen sich die beiden Kupplungen mit unterschiedlicher Stellgrößenhöhe individuell ansteuern.

Das vorstehend beschriebene System bzw. das vorstehend beschriebene Verfahren vereinfacht die aus dem Stand der Technik bekannten Systeme, die eine Ansteuerung der beiden Kupplungsseiten mit einer Stellgröße in jeweils unterschiedlicher Höhe ermöglichen. Zum einen kann zumindest einseitig ein Individualsteuerglied wie ein Druckregelventil entfallen. Auch muss die zu entwickelnde Steuersoftware nicht mehr die individuelle Ansteuerung von zwei einzelnen Individualsteuergliedern gewährleisten, so dass der Applikationsaufwand sowie der Aufwand für die zu verwendende Steuerhardware verringert ist und ein Teil der bisher einzusetzenden Mess- und Regeltechnik einschließlich der erforderlichen Hardware wie Kabel oder Stecker entfällt. Gleichwohl bleibt - anders als bei Systemen, bei denen beide Kupplungen stets gleich angesteuert werden - der maßgebliche Vorteil der Systeme, insbesondere die Realisierung einer Active-Yaw Funktion, weitgehend erhalten. Bevorzugt ist vorgesehen, dass die Stellgröße Druck ist, das System eine geregelte, insbesondere eine drehzahlgeregelte oder drehmomentgeregelte Hydraulikpumpe als Stellgrößeneinheit umfasst und die von der Stellgrößeneinheit gewährleistete Stellgrößenveränderung unmittelbar über die Änderung der Drehzahl oder des Drehmoments der Hydraulikpumpe erfolgt, also über eine Änderung der Größe, über die die Höhe der von der Hydraulikpumpe zur Verfügung gestellten Stellgröße beeinflussbar ist. Die über eine Steuereinrichtung gezielt ansteuerbare Hydraulikpumpe ermöglicht so zunächst in einer ersten Stufe eine zentrale Erzeugung und Veränderung der Stellgröße (des hydraulischen Drucks) durch Beeinflussung der Pumpendrehzahl. Das der zweiten Kupplung zugeordnete Individualsteuerglied (ein Druckregelventil) ermöglicht dann in einer zweiten Stufe die Änderung (die Minderung) des originär von der Hydraulikpumpe erzeugten Drucks für die zweite Kupplung, während der von der Hydraulikpumpe originär erzeugte Druck der ersten Kupplung unverändert (von Übertragungsverlusten abgesehen) zugeleitet wird, insbesondere ohne ein der Hydraulikpumpe nachgelagertes Individualsteuerglied.

Es kann sich aber - je nach tatsächlich verwendetem Kupplungsbetätigungsmechanismus - auch um andere Stellgrößeneinheiten handeln, die zum Beispiel Strom, mechanische Kraft, magnetische Kraft oder pneumatischen Druck zur Verfügung stellen.

Da das der zweiten Kupplung zugeordnete Individualsteuerglied in der Regel nicht eine Erhöhung, sondern nur eine Verringerung der auf die zweite Kupplung wirkenden Stellgröße ermöglicht, sollten die erste Kupplung und die zweite Kupplung hinsichtlich ihrer Kupplungseigenschaften derart aufeinander abgestimmt sein, dass bei Beaufschlagung beider Kupplungen mit der Stellgröße in gleicher Höhe die zweite Kupplung ein größeres Kupplungsmoment zu übertragen vermag als die erste Kupplung. Zur Einstellung des gleichen übertragbaren Antriebsmoments ist dann bei der zweiten Kupplung ein geringerer Druck erforderlich als bei der ersten Kupplung. Hierdurch wird bei einem Individualsteuerglied, dass die von der Stellgrößeneinheit zur Verfügung gestellte Höhe der Stellgröße nur zu verringern vermag, gewährleistet, dass der zweiten Kupplung durch die der Stellgrößeneinheit nachgelagerte Beeinflussung der Stellgröße mittels des Individualsteuerglieds sowohl ein höheres als auch ein niedrigeres übertragbares Kupplungsmoment als der ersten Kupplung zugewiesen werden kann.

Die Abstimmung der Eigenschaften der ersten und zweiten Kupplung im vorstehend beschriebenen Sinne kann insbesondere vorsehen, dass die zweite Kupplung einen von der ersten Kupplung verschiedenen Druckpunkt aufweist, insbesondere also einen gegenüber der ersten Kupplung niedrigeren Druckpunkt. Dies trägt dazu bei, dass die zweite Kupplung bei Beaufschlagung mit der Stellgröße in gleicher Höhe insbesondere dann, wenn die Kupplungen mit einer Stellgröße in niedriger Höhe betrieben werden, ein höheres übertragbares Moment als die erste Kupplung aufweist.

Alternativ oder zusätzlich hierzu kann vorgesehen sein, dass die zweite Kupplung eine von der ersten Kupplung verschiedene wirksame Kupplungsreibfläche aufweist, insbesondere eine gegenüber der ersten Kupplung größere wirksame Kupplungsreibfläche. Dies kann bei Verwendung einer Lamellenreibkupplung insbesondere durch eine unterschiedliche Anzahl von Kupplungslamellen gewährleistet werden.

Weiter kann alternativ oder zusätzlich zu den vorstehend beschriebenen Maßnahmen vorgesehen sein, dass die zweite Kupplung einen von der ersten Kupplung verschiedenen wirksamen effektiven Kupplungsdurchmesser aufweist, insbesondere einen gegenüber der ersten Kupplung größeren wirksamen effektiven Kupplungsdurchmesser.

Durch die vorstehenden Maßnahmen ist gewährleistet, dass dann, wenn die zweite Kupplung mit der Stellgröße in gleicher Höhe wie die erste Kupplung beaufschlagt wird, die zweite Kupplung ein höheres übertragbares Moment als die erste Kupplung aufweist. Gleichwohl lässt sich durch das der zweiten Kupplung zugeordnete Individualsteuerglied die der zweiten Kupplung zugeleitete Stellgröße derart minimieren, dass das von der zweiten Kupplung übertragbare Moment unter das von der ersten Kupplung übertragbare Moment fällt.

Ebenfalls zur Erfindung gehörig werden die Ausgleichseinheit an sich, bei der die erste Kupplung und die zweite Kupplung voneinander unterschiedliche Kupplungseigenschaften aufweisen, sowie ein Antriebsstrang mit einer solchen Ausgleichseinheit angesehen, die jeweils über ein System zum Betreiben der Ausgleichseinheit wie vor- und nachstehend erläutert verfügen. Auch wird eine elektronische Steuereinheit (ECU), in deren Programmspeicher ein Computerprogrammprodukt gespeichert ist, das zur Ausführung des vor- und nachstehend erläuterten Verfahrens eingerichtet ist, als zur Erfindung gehörig angesehen.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt
- Fig. 1: eine kupplungsgesteuerte, differentiallose Ausgleichseinheit mit einer Steuereinrichtung in schematischer Darstellung,
- Fig. 2: eine Darstellung möglicher Kupplungskennlinien der ersten Kupplung und der zweiten Kupplung, und
- Fig. 3: Darstellung des Momentübertragungspotentials beider Kupplungen über der Zeitachse bei kontinuierlich zunächst stetig steigendem und dann stetig sinkendem Druck.

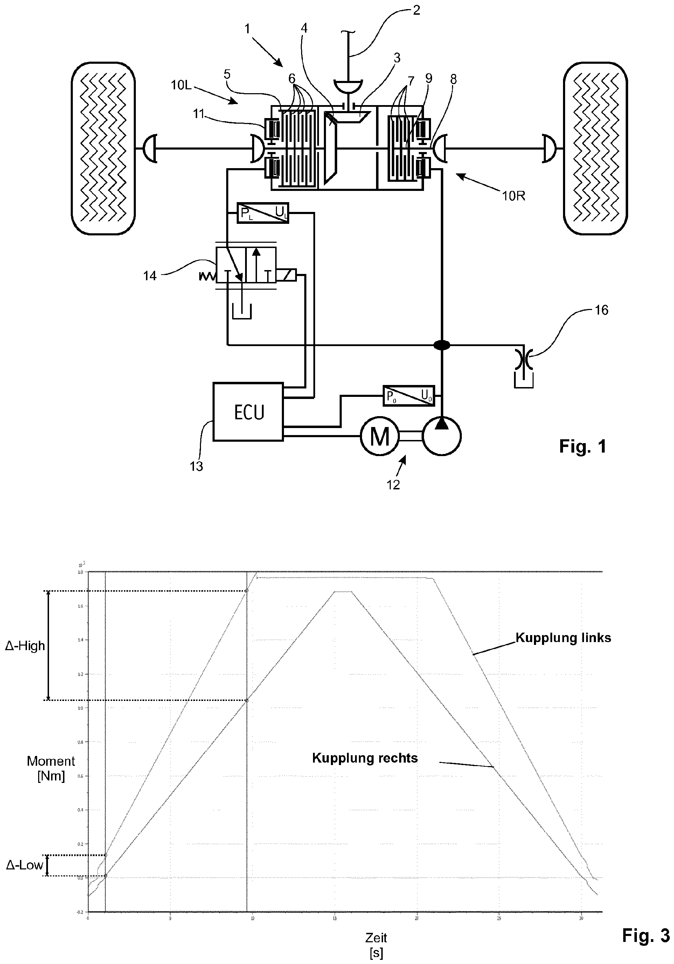

In Figur 1 ist eine Ausgleichseinheit 1 zusammen mit einem System zu deren Betrieb in einer schematischen Ansicht gezeigt. Die in den Figuren bestimmten Bezugszeichen zugeordneten Buchstaben "L" und "R" stehen für das jeweils linke ("L") oder rechte ("R") Bauteil des in Teilen symmetrischen Grundaufbaus.

Die Antriebleistung des Fahrzeugantriebs wird über ein Eingangsglied 2, typischerweise eine Kardanwelle, und ein damit verbundenes Antriebsrad 3 auf ein Tellerrad 4 weitergeleitet und von dort auf einen linken bzw. rechten Antriebslamellenträger 5 übertragen, dem jeweils axial verschieblich angeordnete Antriebslamellen 6 drehfest zugeordnet sind. Diese Antriebslamellen 6 wirken mit linken bzw. rechten Abtriebslamellen 7 zusammen, die wiederum mit einem linken bzw. rechten Ausgangs- bzw. Abtriebsglied 8 drehfest zusammenwirken und auf einem linken bzw. rechten Abtriebslamellenträger 9 axial verschieblich aber drehfest angeordnet sind. Die so gebildete linke bzw. rechte Kupplungseinheit 10 stellt eine grundsätzlich bekannte Lamellenkupplung dar.

Sowohl der rechten Kupplungseinheit als auch der linken Kupplungseinheit ist als Kupplungsbetätigungseinrichtung jeweils ein bevorzugt hydraulisch zu betätigender Kupplungsaktuator 11 zugeordnet, wobei alternativ zu einer hydraulischen Kupplungsbetätigung auch andere Kupplungsbetätigungsmechanismen sinnvoll einsetzbar sind, insbesondere elektromechanische, elektromagnetische, elektrohydraulische oder pneumatische arbeitende Kupplungsbetätigungseinrichtungen.

Über die Kupplungsaktuatoren 11 werden die Kupplungseinheiten angesteuert und über die Stellgröße "hydraulischer Druck" wird für jede der Kupplungen der Kupplungsdruck, also die Andrückkraft, mit der die Ab- bzw. Antriebslamellen aneinander gedrückt werden, beeinflusst, so dass sich das von den Kupplungen übertragbare Moment durch die Höhe der dem Kupplungsbetätigungseinrichtung zugeleiteten Stellgröße gezielt einstellen lässt. Bei nicht mittels hydraulischen Drucks arbeitenden Kupplungsbetätigungseinrichtungen wäre die Stellgröße - je nach gewähltem Wirkmechanismus - zum Beispiel eine mechanische Kraft, Stromstärke, elektrische Spannung oder pneumatischer Druck.

In den Figuren ist der drehfest mit dem Eingangsglied 2 gekoppelte Antriebslamellenträger 5 als Außenlamellenträger und der drehfest mit den Antriebsrädern gekoppelte Abtriebslamellenträger 9 als Innenlamellenträger ausgeführt. Diese Ausgestaltung kann selbstverständlich auch umgekehrt werden. In Figur 1 ist ein System zum Betreiben und Ansteuern der linken bzw. rechten Kupplungseinheit gezeigt, bei dem die linke bzw. rechte der beiden Kupplungen 10 fahrzustandsunabhängig individuell mit einem unterschiedlichen Druck angesteuert werden kann. In Figur 1 bildet beispielhaft die rechte Kupplung 10R die "erste Kupplung" im Sinne der Erfindung und die linke Kupplung 10L die "zweite Kupplung" im Sinne der Erfindung. Diese Anordnung ist beispielhaft und kann selbstverständlich auch umgekehrt werden. Eine elektronische Steuereinheit 13 erfasst die im System vorliegenden Drücke p₀ und p_{L} und steuert basierend auf hinterlegten Kennfeldern und unter Berücksichtigung von Fahrzustandsdaten (Radgeschwindigkeiten, Beschleunigungskräften, Fahrzeugneigung, Geschwindigkeit, Lenkwinkel, etc.) die linke bzw. rechte Kupplung mit der Stellgröße "hydraulischer Druck" individuell an.

Der originär von einer motorbetriebenen hydraulischen Pumpeinheit 12 in einer ersten (Druckerzeugungs-)Stufe erzeugte Ausgangsdruck p₀ wird von der Pumpeinheit 12 durch Einstellen der entsprechenden Pumpendrehzahl in fahrzustandsabhängiger Höhe erzeugt und wirkt in der von der Pumpeinheit 12 erzeugten Höhe unmittelbar auf den Kupplungsaktuator 11R. Eine Blende 16 sorgt für eine bessere Regelbarkeit des Ausgangsdrucks p₀ und macht insbesondere für die Fälle, in den der Ausgangsdruck p₀ zügig minimiert werden muss, eine Pumpeinheit, die zur Senkung des Ausgangsdrucks eine zweite Drehrichtung aufweisen müsste, entbehrlich.

Der von der hydraulischen Pumpeinheit 12 erzeugte Druck p₀ wird zumindest indirekt auch für die Ansteuerung der linken Kupplung 10L verwendet, wobei zwischen der hydraulischen Pumpeinheit 12 und dem Kupplungsaktuator 11L als Individualsteuerglied 14 ein Druckregelventil vorgesehen ist, dass den von der hydraulischen Pumpeinheit erzeugten Druck p₀ für die rechte Kupplung 10R in einer zweiten (Druckminderungs-)Stufe herunterzuregeln vermag. Der auf die rechte Kupplung 10R wirkende Druck p_{R} ist dabei stets kleiner oder gleich dem von der hydraulischen Pumpe 12 (der Stellgrößeneinheit) erzeugten Ausgangsruck po. Es gilt p₀ ≥ p_{L}.

Die Versorgung der ersten Kupplung mit der die Andrückkraft der Kupplungslamellen beeinflussenden Stellgröße erfolgt demnach ohne weitere Individualsteuerglieder, bei der in Figur 1 gezeigten Fall der Verwendung einer hydraulischen Pumpeinheit 12 also insbesondere ohne der Pumpeinheit 12 nachgeschaltete Druckregelventile. Die Höhe der Stellgröße Hydraulikdruck wird für den in Figur 1 gezeigten Fall über die Pumpleistung der hydraulischen Pumpeinheit reguliert, insbesondere über deren mit der Drehzahl veränderlichen Förderleistung. Im Falle andersartiger Kupplungsbetätigungsmechanismen gilt diese Aussage natürlich für die dann zur Beeinflussung des übertragbaren Kupplungsmoments herangezogene Stellgröße gleichermaßen.

Um trotz der in Figur 1 gezeigten Ausgestaltung, bei der die der linken Kupplung 10L zugeleitete Stellgröße p_{L} der Höhe nach stets kleiner oder gleich der der rechten Kupplung 10R zugeleiteten Stellgröße p₀ ist, die rechte Kupplung 10R derart ansteuern zu können, dass in einem bestimmten Fahrzustand das mit der linken Kupplung 10L übertragbare Antriebsmoment größer ist als das mit der rechten Kupplung 10R übertragbare Antriebsmoment ist, ist vorgesehen, dass die rechte Kupplung 10R andere Kupplungseigenschaften aufweist als die linke Kupplung 10L. Insbesondere ist vorgesehen, dass die linke Kupplung 10L bei Zuleitung einer Stellgröße in gleicher Höhe ein größeres Antriebsmoment zu übertragen vermag als die rechte Kupplung 10R bzw. dass bei einer Einregelung der Stellgrößen p₀ und p_{L} in einer Weise, dass beide Kupplungen auf das gleiche übertragbare Antriebsmoment eingestellt werden, die der linken Kupplung 10L zugewiesene Stellgröße der Höhe nach geringer ist als die der rechten Kupplung 10R zugewiesene Stellgröße.

Aus diesem Grund ist in Figur 1 die rechte Kupplung 10R anders ausgestaltet als die linke Kupplung 10L. Die rechte Kupplung 10R hat erkennbar eine geringere Anzahl an Kupplungslamellen und einen geringeren wirksamen Kupplungsdurchmesser. Sie hat, wie nachfolgend noch erläutert werden wird, außerdem einen höheren Druckpunkt.

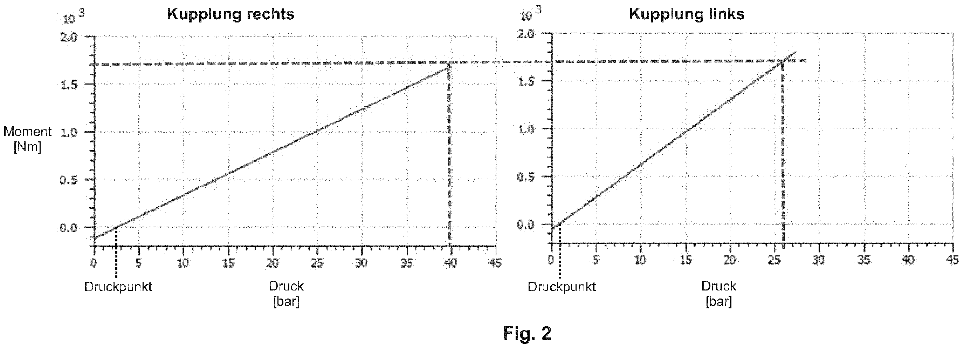

Figur 2 zeigt beispielhaft die Kupplungskennlinien einer linken Kupplung 10L und einer rechten Kupplung 10R wie sie bei der Erfindung zum Einsatz kommen könnten. Auf der x-Achse ist jeweils der auf den Kupplungsbetätigungsmechanismus einwirkende Druck aufgetragen, auf der Y-Achse ist das sich entsprechend des aufgebrachten Drucks einstellende Momentenübertragungspotential der jeweiligen Kupplung aufgetragen. An den unterschiedlichen Verläufen der Kupplungskennlinien ist erkennbar, dass die rechte Kupplung bei gleichem Druck deutlich weniger Moment zu übertragen vermag als die linke Kupplung (in Figur 2 etwa 1.000 Nm rechts und etwa 1.600 Nm links bei jeweils 25 bar).

Als weitere Maßnahme zur Beeinflussung der Kupplungseigenschaften im Sinne der Erfindung ist vorgesehen, dass der Druckpunkt der rechten Kupplung (die Höhe der Stellgröße, ab dem die jeweilige Kupplung Antriebsmoment zu übertragen beginnt) oberhalb des Druckpunktes der linken Kupplung liegt (in Figur 2 beispielhaft rechts etwa 2,5 bar und links etwa 1 bar).

Figur 3 zeigt schließlich eine Darstellung des Momentübertragungspotentials beider Kupplungen über der Zeitachse bei kontinuierlich zunächst stetig steigendem und dann stetig sinkendem Druck.

An der y-Achse ablesbar ist zum einen die zwischen den Kupplungen realisierbare Differenz des jeweils übertragbaren Drehmomentpotentials Δ-Low. Hierbei handelt es sich um die minimale Differenz des von den Kupplungen jeweils übertragbaren Drehmoments in dem Druckpunkt der rechten (der schwächer ausgelegten) Kupplung. Bei dem Druck, mit dem die rechte Kupplung gerade beginnt zu greifen, ist die linke Kupplung in dem in Figur 3 illustrierten Beispiel bereits in der Lage, etwa 120 Nm zu übertragen.

An der y-Achse ebenfalls ablesbar ist die zwischen den Kupplungen maximal realisierbare Differenz des jeweils übertragbaren Drehmomentpotentials Δ-High, bei dem die linke Kupplung (die stärker ausgelegte Kupplung) das maximale Drehmomentpotential der rechten Kupplung (der schwächer ausgelegten Kupplung) erreicht. Diese Differenz beträgt in dem in Figur 3 gezeigten Beispiel etwa 630 Nm.

Hieraus lässt sich für das in den Figuren 2 und 3 illustrierte Beispiel ablesen, dass sich mit dem System eine Drehmomentdifferenz zwischen rechter und linker Kupplung und damit zwischen rechter und linker Abtriebsseite der Ausgleichseinheit zwischen 120 Nm und etwa 630 Nm realisieren lässt, unabhängig davon, ob der rechten oder der linken Kupplung mehr oder weniger Drehmomentübertragungspotential zugewiesen wird.

### Bezugszeichenliste

- 1: Ausgleichseinheit
- 2: Eingangsglied
- 3: Antriebsrad
- 4: Tellerrad
- 5: Antriebslamellenträger
- 6: Antriebslamellen
- 7: Abtriebslamellen
- 8: Ausgangsglied
- 9: Abtriebslamellenträger
- 10: Kupplungseinheit
- 11: Kupplungsaktuator
- 12: hydraulische Pumpeneinheit
- 13: elektronische Steuereinheit
- 14: Individualsteuerglied
- 15: Antriebsräder
- 16: hydraulische Blende
- L/R: Links/Rechts

## Patentansprüche

1. System zur Ansteuerung einer differentiallosen Ausgleichseinheit (1) einer zumindest zeitweise antreibbaren Achse eines Kraftfahrzeugs, wobei die Ausgleichseinheit (1) aufweist
- ein Eingangsglied (2)
- ein erstes Ausgangsglied (8R), das über eine erste reibschlüssige Kupplung (10R) mit dem Eingangsglied (2) gekoppelt werden kann, um ein Antriebsmoment auf ein erstes Antriebsrad (15 R) zu übertragen, und
- ein zweites Ausgangsglied (8L), das über eine zweite reibschlüssige Kupplung (10L) mit dem Eingangsglied (2) gekoppelt werden kann, um ein Antriebsmoment auf ein zweites Antriebsrad (15L) zu übertragen,
**dadurch gekennzeichnet, dass** eine von einer Stellgrößeneinheit (12) zur Verfügung gestellte Stellgröße zur Einstellung des von den Kupplungen (10R, 10L) übertragbaren Antriebsmoments der ersten Kupplung (10R) ohne Zwischenschaltung eines Individualsteuerglieds zugeleitet wird, während die von der Stellgrößeneinheit (12) zur Verfügung gestellte Stellgröße der zweiten Kupplung (10L) unter Zwischenschaltung eines Individualsteuerglieds (14) zugeleitet wird.

2. System nach Anspruch 1, **dadurch gekennzeichnet, dass** die erste Kupplung (10R) und die zweite Kupplung (10L) voneinander unterschiedliche Kupplungseigenschaften aufweisen.

3. System nach einem der beiden vorhergehenden Ansprüche, **dadurch gekennzeichnet, dass** die Stellgrößeneinheit (12) zur Veränderung der Höhe der von ihr zur Verfügung gestellten Stellgröße gezielt ansteuerbar ist.

4. System nach einem der vorhergehenden Ansprüche, **dadurch gekennzeichnet, dass** die Kupplungseigenschaften der ersten Kupplung (10R) und die Kupplungseigenschaften der zweiten Kupplung (10L) derart aufeinander abgestimmt sind, dass bei Beaufschlagung beider Kupplungen mit einer Stellgröße in gleicher Höhe die zweite Kupplung (10L) ein größeres Kupplungsmoment zu übertragen vermag als die erste Kupplung (10R).

5. System nach einem der vorhergehenden Ansprüche, **dadurch gekennzeichnet, dass** die Kupplungseigenschaften der ersten Kupplung (10R) und die Kupplungseigenschaften der zweiten Kupplung (10L) derart aufeinander abgestimmt sind, dass der zweiten Kupplung (10L) durch Beeinflussung der Stellgröße mittels des Individualsteuerglieds (14) sowohl ein höheres als auch ein niedrigeres übertragbares Kupplungsmoment als der ersten Kupplung (10R) zugewiesen werden kann.

6. System nach einem der vorhergehenden Ansprüche, **dadurch gekennzeichnet, dass** die zweite Kupplung (10L) einen von der ersten Kupplung (10R) verschiedenen Druckpunkt aufweist, insbesondere einen gegenüber der ersten Kupplung (10R) niedrigeren Druckpunkt.

7. System nach einem der vorhergehenden Ansprüche, **dadurch gekennzeichnet, dass** die zweite Kupplung (10L) eine von der ersten Kupplung (10R) verschiedene wirksame Kupplungsreibfläche aufweist, insbesondere eine gegenüber der ersten Kupplung (10R) größere wirksame Kupplungsreibfläche.

8. System nach einem der vorhergehenden Ansprüche, **dadurch gekennzeichnet, dass** die zweite Kupplung (10L) einen von der ersten Kupplung (10R) verschiedenen wirksamen Kupplungsdurchmesser aufweist, insbesondere einen gegenüber der ersten Kupplung (10R) größeren wirksame Kupplungsdurchmesser.

9. System nach einem der vorhergehenden Ansprüche, **dadurch gekennzeichnet, dass** die Stellgröße hydraulischer Druck ist, dass das System eine geregelte Hydraulikpumpe als Stellgrößeneinheit (12) umfasst, und dass die das Kupplungsmoment der ersten Kupplung (10R) beeinflussende Stellgrößenveränderung unmittelbar über die Regelung der Hydraulikpumpe (12) erfolgt, während der zweiten Kupplung (10L) zusätzlich ein der Hydraulikpumpe nachgelagertes Individualsteuerglied (14) zugeordnet ist, mittels dem die von der Hydraulikpumpe (12) zur Verfügung gestellte Stellgröße zusätzlich veränderlich, insbesondere der Höhe nach verringerbar, ist.

10. Verfahren zum Betreiben einer differentiallosen Ausgleichseinheit (1) einer zumindest zeitweise antreibbaren Achse eines Kraftfahrzeugs, wobei die Ausgleichseinheit aufweist
- ein Eingangsglied (2)
- ein erstes Ausgangsglied (8R), das über eine erste reibschlüssige Kupplung (10R) mit dem Eingangsglied (2) gekoppelt werden kann, um Antriebsleistung auf ein erstes Antriebsrad (15R) zu übertragen, und
- ein zweites Ausgangsglied (8L), das über eine zweite reibschlüssige Kupplung (10L) mit dem Eingangsglied (2) gekoppelt werden kann, um Antriebsleistung auf ein zweites Antriebsrad (15L) zu übertragen,
und wobei eine Stellgrößeneinheit (12) eine Stellgröße zur Verfügung stellt, mit der die erste Kupplung (10R) und die zweite Kupplung (10L) beaufschlagt werden, **dadurch gekennzeichnet, dass** die von der Stellgrößeneinheit (12) zur Verfügung gestellte Stellgröße der ersten Kupplung (10R) ohne Zwischenschaltung eines Individualsteuerglieds zugeleitet wird, während die von der Stellgrößeneinheit (12) zur Verfügung gestellte Stellgröße der zweiten Kupplung (10L) unter Zwischenschaltung eines Individualsteuerglieds (14) zugeleitet wird.

11. Verfahren nach dem vorhergehenden Anspruch, **dadurch gekennzeichnet, dass** zur Betätigung der ersten Kupplung (10R) und zur Betätigung der zweiten Kupplung (10L) ein Kupplungsbetätigungsmechanismus (11R, 11L) vorgesehen ist, auf den die Stellgröße wirkt, um die Kupplungen (10R, 10L) zu betätigen, und das Einstellen der Höhe der auf die erste Kupplung (10R) wirkenden Stellgröße über die Beeinflussung der Stellgrößeneinheit (12) erfolgt, während das Einstellen der Höhe der auf die zweite Kupplung (10L) wirkenden Stellgröße über das der zweiten Kupplung (10L) zusätzlich zugeordnete Individualsteuerglied (14) erfolgt.

12. Verfahren nach einem der beiden vorhergehenden Ansprüche, **dadurch gekennzeichnet, dass** die Stellgrößeneinheit (12) eine Hydraulikpumpe und die Stellgröße hydraulischer Druck ist und die Veränderung der auf die erste Kupplung (10R) wirkenden Stellgröße über die Änderung der Drehzahl einer Hydraulikpumpe (12) erfolgt.

13. Differentiallose Ausgleichseinheit (1) für eine zumindest zeitweise antreibbare Achse eines Kraftfahrzeugs, wobei die Ausgleichseinheit (1) aufweist
- ein Eingangsglied (2)
- ein erstes Ausgangsglied (8 R), das über eine erste reibschlüssige Kupplung (10 R) mit dem Eingangsglied (2) gekoppelt werden kann, um Antriebsleistung auf ein erstes Antriebsrad (15 R) zu übertragen, und
- ein zweites Ausgangsglied (8L), das über eine zweite reibschlüssige Kupplung (10L) mit dem Eingangsglied (2) gekoppelt werden kann, um Antriebsleistung auf ein zweites Antriebsrad (15L) zu übertragen,
**dadurch gekennzeichnet, dass** die erste Kupplung (10R) und die zweite Kupplung (10L) voneinander unterschiedliche Kupplungseigenschaften aufweisen.

14. Ausgleichseinheit nach dem vorherigen Anspruch, umfassend ein System zu dessen Ansteuerung nach einem der Ansprüche 1 bis 9.

15. Computerprogrammprodukt, das eine elektronische Steuereinheit (13) zur Steuerung eines Systems nach einem der Ansprüche 1 bis 9 dazu veranlasst, eine Ausgleichseinheit nach Anspruch 13 nach dem Verfahren gemäß einem der Ansprüche 10 bis 12 anzusteuern, wenn die elektronische Steuereinrichtung im Programmcode des Computerprogrammprodukts enthaltene Programmroutinen ausführt.

16. Elektronische Steuereinheit (13) zur Steuerung einer Ausgleichseinheit nach einem der Ansprüche 13 oder 14 nach dem Verfahren gemäß einem der Ansprüche 10 bis 12 mit einem Programmspeicher, der mit einem Computerprogrammprodukt nach dem vorhergehenden Anspruch bedatet ist.

## Claims

1. System for controlling a differential-free compensating unit (1) of an at least intermittently driveable axle of a motor vehicle, wherein the compensating unit (1) comprises
- an input member (2)
- a first output member (8R) that can be coupled with the input member (2) via a first friction coupling (10R) to transfer an output torque to a first drive gear (15R), and
- a second output member (8L) that can be coupled with the input member (2) via a second friction coupling (10L) to transfer an output torque to a second drive gear (15L),
**characterised in that** a correcting variable provided by a correcting variable unit (12) is forwarded to an individual control member without interposition for adjusting the input torque of the first coupling (10R) to be transferred from the couplings (10R, 10L), whilst the correcting variable of the second coupling (10L), provided by the correcting variable unit (12), is supplied upon switching on an individual control member (14).

2. System according to claim 1, **characterised in that** the first coupling (10R) and the second coupling (10L) have coupling characteristics that differ from each other.

3. System according to one of the two preceding claims, **characterised in that** the correcting variable unit (12) can be controlled in a targeted way for changing the size of the correcting variable provided to the same.

4. System according to one of the preceding claims, **characterised in that** coupling characteristics of the first coupling (10R) and the coupling characteristics of the second coupling (10L) are matched to each other in such a way that the second coupling (10L) can transfer a greater coupling torque than the first coupling (10R) when a correcting variable of identical size is applied to both couplings.

5. System according to one of the preceding claims, **characterised in that** the coupling characteristics of the first coupling (10R) and the coupling characteristics of the second coupling (10L) are matched to each other in such a way that a higher as well as a lower transferrable coupling torque can be applied to the second coupling (10L) than is applied to the first coupling (10R) by influencing the correcting variable by means of the individual control member (14).

6. System according to one of the preceding claims, **characterised in that** the second coupling (10L) has a pressure point that is different from the first coupling (10R), in particular a pressure point that is lower than that of the first coupling (10R).

7. System according to one of the preceding claims, **characterised in that** the second coupling (10L) has a coupling striking surface that acts differently from that of the first coupling (10R), in particular a coupling striking surface the effect of which is greater than that of the first coupling (10R).

8. System according to one of the preceding claims, **characterised in that** the second coupling (10L) has a coupling diameter that acts differently from that of the first coupling (10R), in particular a coupling diameter the effect of which is greater than that of the first coupling (10R).

9. System according to one of the preceding claims, **characterised in that** the correcting variable is hydraulic pressure, that the system comprises a controlled hydraulic pump as a correcting variable unit (12), and that the correcting variable change influencing the coupling torque of the first coupling (10R) is realised directly via the control of the hydraulic pump (12), whilst the second coupling (10L) is also allocated an individual control member (14) downstream from the hydraulic pump, by means of which the correcting variable provided by the hydraulic pump (12) is also variable, in particular height reducible.

10. Method for operating a differential-free compensating unit (1) of an at least intermittently driveable axle of a motor vehicle, wherein the compensating unit comprises
- an input member (2)
- a first output member (8R) that can be coupled with the input member (2) via a first friction coupling (10R) to transfer an output torque to a first drive gear (15R), and
- a second output member (8L) that can be coupled with the input member (2) via a second friction coupling (10L) to transfer an output torque to a second drive gear (15L),
and wherein a correcting variable unit (12) provides a correcting variable applied to the first coupling (10R) and the second coupling (10L), **characterised in that** the correcting variable of the first coupling (10R) supplied by the correcting variable unit (12) is forwarded to an individual control member without interposition, whilst the correcting variable of the second coupling (10L), provided by the correcting variable unit (12), is supplied upon switching on an individual control member (14).

11. Method according to the preceding claim, **characterised in that** a coupling activation mechanism (11R, 11L) is envisaged for activating the first coupling (10R) and for activating the second coupling (10L), upon which the correcting variable acts in order to activate the couplings (10R, 10L), and **in that** adjusting the extent of the correcting variable acting on the first coupling (10R) is realised by influencing the correcting variable unit (12), whilst adjusting the extent of the correcting variable acting on the second coupling (10L) is realised via the individual control members (14) additionally allocated to the second coupling (10L).

12. Method according to one of the two preceding claims, **characterised in that** the correcting variable unit (12) is a hydraulic pump and the correcting variable is hydraulic pressure, and **in that** changing the correcting variable acting on the first coupling (10R) is realised by changing the rotation speed of the hydraulic pump (12).

13. Differential-free compensating unit (1) for an at least intermittently driveable axle of a motor vehicle, wherein the compensating unit (1) comprises
- an input member (2)
- a first output member (8R) that can be coupled with the input member (2) via a first friction coupling (10R) to transfer an output torque to a first drive gear (15R), and
- a second output member (8L) that can be coupled with the input member (2) via a second friction coupling (10L) to transfer an output torque to a second drive gear (15L),
**characterised in that** the first coupling (10R) and the second coupling (10L) have coupling characteristics that differ from each other.

14. Compensating unit according to one of the preceding claims, comprising a system for controlling the same according to one of the claims 1 to 9.

15. Computer program product that initiates an electronic control unit (13) to control a system according to one of the claims 1 to 9 to control a compensating unit according to claim 13 according to the method according to one of the claims 10 to 12, when the electronic control unit carries out program routines included in the program code of the computer program product.

16. Electronic control unit (13) for controlling a compensating unit according to one of the claims 13 or 14 according to the method according to one of the claims 10 to 12, with a program memory populated with data of a computer program product according to the preceding claim.

## Revendications

1. Système pour la commande d'une unité de compensation non différentielle (1) d'un axe actionnable au moins par moments d'un véhicule, l'unité de compensation (1) présentant
- un élément d'entrée (2)
- un premier élément de sortie (8R), qui peut être couplé avec l'élément d'entrée (2) par un premier embrayage à friction (10R) afin de transmettre un couple d'entraînement à une première roue motrice (15R), et
- un deuxième élément de sortie (8L), qui peut être couplé avec l'élément d'entrée (2) par un second embrayage à friction (10L) afin de transmettre un couple d'entraînement à une deuxième roue motrice (15R),
**caractérisé en ce qu'**une variable réglante mise à disposition par une unité de variables réglantes (12) est fournie pour régler le couple d'entraînement du premier embrayage (10R) transmissible par les embrayages (10R, 10L) sans interposition d'un élément de commande individuel, tandis que la variable réglante du second embrayage (10L) mise à disposition par l'unité de variables réglantes (12) est fournie avec interposition d'un élément de commande individuel (14).

2. Système selon la revendication 1, **caractérisé en ce que** le premier embrayage (10R) et le second embrayage (10L) présentent des propriétés d'embrayage différentes l'un par rapport à l'autre.

3. Système selon l'une quelconque des deux revendications précédentes, **caractérisé en ce que** l'unité de variables réglantes (12) peut être commandée de manière ciblée pour modifier la hauteur de la variable réglante qu'elle met à disposition.

4. Système selon l'une quelconque des revendications précédentes, **caractérisé en ce que** les propriétés d'embrayage du premier embrayage (10R) et les propriétés d'embrayage du second embrayage (10L) sont adaptées les unes aux autres de telle sorte que, lorsque les deux embrayages sont sollicités avec une variable réglante de même hauteur, le second embrayage (10L) transmet un couple d'embrayage plus grand que le premier embrayage (10R).

5. Système selon l'une quelconque des revendications précédentes, **caractérisé en ce que** les propriétés d'embrayage du premier embrayage (10R) et les propriétés d'embrayage du second embrayage (10L) sont adaptées les unes aux autres de telle sorte que non seulement un couple d'embrayage plus élevé transmissible, mais également un plus faible que le premier embrayage (10R) peuvent être attribués au second embrayage (10L) en agissant sur la variable réglante à l'aide de l'élément de commande individuel (14).

6. Système selon l'une quelconque des revendications précédentes, **caractérisé en ce que** le second embrayage (10L) présente un point de pression différent de celui du premier embrayage (10R), notamment un point de pression plus faible par rapport au premier embrayage (10R).

7. Système selon l'une quelconque des revendications précédentes, **caractérisé en ce que** le second embrayage (10L) présente une surface de friction d'embrayage efficace différente du premier embrayage (10R), notamment une surface de friction d'embrayage efficace plus grande par rapport au premier embrayage (10R).

8. Système selon l'une quelconque des revendications précédentes, **caractérisé en ce que** le second embrayage (10L) présente un diamètre d'embrayage efficace différent du premier embrayage (10R), notamment un diamètre d'embrayage efficace plus grand par rapport au premier embrayage (10R).

9. Système selon l'une quelconque des revendications précédentes, **caractérisé en ce que** la variable réglante est une pression hydraulique, que le système comprend une pompe hydraulique réglée comme une unité de variables réglantes (12), et que la variable réglante influençant le couple d'embrayage du premier embrayage (10R) est modifiée immédiatement par le réglage de la pompe hydraulique (12), tandis qu'en supplément un élément de commande individuel (14) en aval de la pompe hydraulique est attribué au second embrayage (10L), ledit élément permet de modifier en plus la variable réglante mise à disposition par la pompe hydraulique (12), notamment diminuer la hauteur.

10. Processus de fonctionnement d'une unité de compensation non différentielle (1) d'un axe actionnable au moins par moments d'un véhicule, l'unité de compensation présentant
- un élément d'entrée (2)
- un premier élément de sortie (8R), qui peut être couplé avec l'élément d'entrée (2) par un premier embrayage à friction (10R) afin de transmettre une puissance motrice à une première roue motrice (15R), et
- un deuxième élément de sortie (8L), qui peut être couplé avec l'élément d'entrée (2) par un second embrayage à friction (10L) afin de transmettre une puissance motrice à une deuxième roue motrice (15L),
et une unité de variables réglantes (12) mettant à disposition une variable réglante avec laquelle le premier embrayage (10R) et le second embrayage (10L) sont sollicités, **caractérisé en ce que** la variable réglante du premier embrayage (10R) mise à disposition par l'unité de variables réglantes (12) est fournie sans interposition d'un élément de commande individuel, tandis que la variable réglante du second embrayage (10L) mise à disposition par l'unité de variables réglantes (12) est fournie avec interposition d'un élément de commande individuel (14).

11. Processus selon la revendication précédente, **caractérisée en ce qu'**un mécanisme d'actionnement d'embrayage (11R, 11L), sur lequel la variable réglante agit pour actionner les embrayages (10R, 10L), est prévu pour actionner le premier embrayage (10R) et actionner le second embrayage (10L), et la hauteur de la variable réglante agissant sur le premier embrayage (10R) est réglée par l'influence de l'unité de variables réglantes (12), tandis que la hauteur de la variable réglante agissant sur le second embrayage (10L) est réglée par l'élément de commande individuel (14) attribué en plus au second embrayage (10L).

12. Processus selon l'une quelconque des deux revendications précédentes, **caractérisé en ce que** l'unité de variables réglantes (12) est une pompe hydraulique et la variable réglante une pression hydraulique, et la variable réglante agissant sur le premier embrayage (10R) est modifiée par le changement du régime d'une pompe hydraulique (12).

13. Unité de compensation non différentielle (1) d'un axe actionnable au moins par moments d'un véhicule, l'unité de compensation (1) présentant
- un élément d'entrée (2)
- un premier élément de sortie (8R), qui peut être couplé avec l'élément d'entrée (2) par un premier embrayage à friction (10R) afin de transmettre une puissance motrice à une première roue motrice (15R), et
- un deuxième élément de sortie (8L), qui peut être couplé avec l'élément d'entrée (2) par un second embrayage à friction (10L) afin de transmettre une puissance motrice à une deuxième roue motrice (15L),
**caractérisé en ce que** le premier embrayage (10R) et le second embrayage (10L) présentent des propriétés d'embrayage différentes l'un par rapport à l'autre.

14. Unité de compensation selon la revendication précédente comprenant un système pour sa commande selon l'une quelconque des revendications 1 à 9.

15. Produit de programme informatique qui amène une unité de commande électronique (13) à commander un système selon l'une quelconque des revendications 1 à 9 à commander une unité de compensation selon la revendication 13 selon le processus selon l'une quelconque des revendications 10 à 12, lorsque le dispositif de commande électronique effectue des routines de programme contenues dans le code de programme du produit de programme informatique.

16. Unité de commande électronique (13) pour la commande d'une unité de compensation selon l'une quelconque des revendications 13 ou 14 selon le processus selon l'une quelconque des revendications 10 à 12 avec une mémoire de programme qui est paramétrée avec un produit de programme informatique selon la revendication précédente.
